# EUROPEAN PATENT APPLICATION

(11) **EP 4 162 815 A1**
(43) Date of publication of application: **12.04.2023**
(21) Application number: 21902446.0
(22) Date of filing: 30.11.2021
(51) Int. Cl.: A23L 33/125, A21D 13/06, A21D 2/18, A23L 2/60

(54) **SWEETENING LIQUID CAPABLE OF PREVENTING AND RELIEVING INTESTINAL SUGAR ALCOHOL INTOLERANCE, AND PREPARATION METHOD THEREFOR AND APPLICATION THEREOF**

(30) Priority: 07.12.2020 CN 202011419420
(71) Applicant: Zhejiang Huakang Pharmaceutical Co., Ltd., Quzhou, Zhejiang 324302 (CN)
(72) Inventor: ZUO, Qile, Quzhou, Zhejiang 324302 (CN); HAN, Feifei, Quzhou, Zhejiang 324302 (CN); ZHU, Xuan, Quzhou, Zhejiang 324302 (CN); CHENG, Xinping, Quzhou, Zhejiang 324302 (CN); LI, Mian, Santa Clara, California 95054 (US); SHI, Lihua, Quzhou, Zhejiang 324302 (CN); ZHANG, Wenyao, Quzhou, Zhejiang 324302 (CN); WANG, Yuan, Quzhou, Zhejiang 324302 (CN)
(74) Representative: Sun, Yiming
(86) International application number: PCT/CN2021/134591
(87) International publication number: WO 2022/121739

(57) **Abstract**

The present invention relates to a sweetener liquid for preventing and relieving intestinal sugar alcohol intolerance. The sweetener liquid per 100ml includes 0.01 to 0.04g of low-esterification pectin, 0.01g to 0.1g of κ-carrageenan, 0.01g to 0.03g of locust bean gum, 30g to 60g of xylitol, 5g to 15g of maltitol and 1g to 10g of sorbitol and remaining water; the low-esterification pectin is a pectin concentrate including, based on parts by weight, 15 parts of calcium citrate, 60 parts of low-molecular-weight pectin, 85 parts of ethylene glycol, 5 parts of carboxymethyl cellulose sodium and 30 parts of sodium citrate; the low-molecular-weight pectin includes a low-sugar fruit juice and a lemon juice; the sweetener liquid has a pH of 5-6.5 and a viscosity of 0.1 to 25mPa•S. The present invention further provides a method of preparing a sweetener liquid and an application thereof. The present invention reduces the diarrhea resulting from ingestion of excess sugar alcohol, and improves the safety and practicality of the sugar alcohol in product applications.

## Description

### TECHNICAL FIELD

The present invention relates to the field of sugar alcohol application technologies, and in particular, to a sweetener liquid for preventing and relieving intestinal sugar alcohol intolerance and a preparation method and application thereof.

### BACKGROUND

Sugar alcohol sweeteners, as a typical functional food additive, are now widely applied to food industry. The major varieties of the sweeteners include sorbitol, xylitol, mannitol and erythritol and the like. Due to high osmosis of sorbitol, xylitol and mannitol and the like, when a large amount of these substances is taken, these high-osmosis substances hinders re-absorption of intestinal walls for water and electrolyte, resulting in presence of excessive unabsorbed water-soluble substances in the intestinal lumen and further leading to occurrence of osmotic diarrhea, which is called sugar alcohol intolerance. The patent with the publication number CN109493974A discloses a method of calculating a tolerance amount of a human body for a sugar alcohol and a functional sugar, which describes the problem of high-content ingestion of xylitol resulting in diarrhea.

When a total content of sugar alcohol in a product exceeds 30g, the product is called high-sugar product. Eating the product will easily result in diarrhea, that is, sugar alcohol intolerance will occur. Generally, in a sugar substitute development, in order to avoid occurrence of intestinal sugar alcohol intolerance, a high-intensity sweetener will be selected to increase a sweetness and the use amount of the sugar alcohol will be reduced. The patent with the publication number CN111436495A discloses a milk-shake solid drink for fat and weight reduction and a preparation method thereof. In this method, the addition amount of xylitol is only about 1.3%, whereas the sweetness is mostly provided by a high-intensity sweetener sucralose or the like. Thus, the total addition amount of xylitol is far less than 30g. This is a common avoiding approach for the industry to avoid diarrhea resulting from addition of excess xylitol.

The patent with the publication number CN107616984A discloses an anti-diarrhea enteral nutritional composition, where a liquid enteral composition for reducing occurrence of diarrhea is provided. The composition includes a low-esterification pectin and some probiotics or sugar alcohols and the like. The enteral nutritional composition can improve the adverse reaction of the gastrointestinal tracts and the pectin is highly required to have an esterification degree of 5% and 30% and a viscosity average molecular weight of 10000 to 150000. Further, a larger amount of single pectin will be needed in order to reach a specific viscosity. The patent with the publication number CN110495609A discloses an iso-osmotic soybean peptide gel product and a preparation method thereof, where the product is suitable for supplementing proteins for osmostic-pressure-sensitive people and people having difficulty in swallowing. In this method, some food colloids are provided as a gel material to achieve iso-osmotic protein supplementation product. The added sugar alcohol is used only as a flavoring agent and the product is mainly to supplement proteins.

In order to enable sugar alcohol to be more widely applied in food additives and especially in sweeteners, the existing technology is to be improved.

### SUMMARY

In order to solve the above technical problems, the present invention provides a sweetener liquid for preventing and relieving intestinal sugar alcohol intolerance and a preparation method and an application thereof. By compounding with several food colloids, based on direct characteristic (hydrophilicity) and synergy effect of food colloids, combination of food colloid system and sugar alcohol can, under the precondition of use of less food colloids, slow the advance time of sugar alcohol in the gastrointestinal tract, balance high osmosis of sugar alcohol, and relieve diarrhea resulting from high-content sugar alcohol, thus preventing and relieving the technical problem of diarrhea resulting from intestinal ingestion of excess sugar alcohol.

The present invention is achieved by providing a sweetener liquid for preventing and relieving intestinal sugar alcohol intolerance. The sweetener liquid per 100ml includes 0.01 to 0.04g of low-esterification pectin, 0.01g to 0.1g of κ-carrageenan, 0.01g to 0.03g of locust bean gum, 30g to 60g of xylitol, 5g to 15g of maltitol and 1g to 10g of sorbitol and remaining water; the low-esterification pectin is a pectin concentrate comprising, based on parts by weight, 15 parts of calcium citrate, 60 parts of low-molecular-weight pectin, 85 parts of ethylene glycol, 5 parts of carboxymethyl cellulose sodium and 30 parts of sodium citrate; the low-molecular-weight pectin includes a low-sugar fruit juice and a lemon juice; the sweetener liquid has a pH of 5-6.5 and a viscosity of 0.1 to 25mPa•S.

The present invention is achieved by providing a method for preparing the above sweetener liquid for preventing and relieving intestinal sugar alcohol intolerance, including the following steps: dissolving low-esterification pectin, κ-carrageenan, locust bean gum, xylitol, maltitol, and sorbitol in water to obtain the sweetener liquid, wherein the low-esterification pectin is obtained in the following steps:
at step 1, placing a cleaned low-sugar fruit into a closed dryer, introducing carbon dioxide with a volume fraction of 75% into the dryer for treatment of 12h to 18h, performing beating to obtain a pomelo fruit syrup, adding a lemon juice of pH1.5 to 2.0 into the obtained low-sugar fruit syrup, and performing continuous hydrolysis and extraction for the fruit syrup for 65min to 80min under the temperature of 85°C to obtain a pectin extract for later use;
at step 2, mixing an activated carbon of a particle size of 180 meshes and water at a weight ratio of 1:5 to obtain an activated carbon mixed solution, adding a nitric acid solution with a weight fraction of 80% into the activated carbon mixed solution, heating to 100 to 110°C, cooking for 3h to 3.5h,and then stopping heating to allow natural cooling to 65°C, and stopping stirring to allow continued cooling to room temperature to obtain an acid-cooked activated carbon solution for later use;
at step 3, using a 160-mesh gauze to coarsely filter the pectin extract prepared in step 1, placing the obtained filtrate into a high speed centrifuge for centrifugation at a rotation speed of 4500 to 5000r/min, collecting a low-layer gel and then adding the acid-cooked activated carbon solution prepared in step 2 into the low-layer gel and stirring for decolorization of 35min to 60min with a decolorization temperature controlled to 45°C, so as to obtain a decolorized pectin filtrate;
at step 4, filtering the above decolorized pectin filtrate by using diatomite and placing the filtrate into a dialysis bag, and then placing the dialysis bag in a pulsating pressure chamber filled up with de-ionized water for pulsating pressure treatment of 10h with a pulsation cycle of 200min under a treatment temperature of 4°C so as to obtain a low-molecular-weight pectin;
at step 5, based on parts by weight, placing 60 parts of the above low-molecular-weight pectin, 15 parts of calcium citrate, 85 parts of ethylene glycol, 5 parts of carboxymethyl cellulose sodium, and 30 parts of sodium citrate into a closed stirring kettle, stirring at a rotation speed of 550 to 600r/min, heating to 55 to 65°C, introducing ammonia gas into the stirring kettle and then placing into a vacuum evaporator with a vacuum degree of -0.1kPa for treatment to obtain a pectin concentrate, i.e. low-esterification pectin.

The present invention is also achieved by providing an application of the sweetener liquid prepared by using the above method for preparing a sweetener liquid for preventing and relieving intestinal sugar alcohol intolerance, including application of the sweetener liquid in foods.

Compared with the prior arts, in the sweetener liquid for preventing and relieving intestinal sugar alcohol intolerance and a preparation method and an application thereof, a low-esterification pectin for preparing a sweetener is specially synthesized and then compounded with other several food colloids. Thus, based on direct characteristics, i.e. hydrophilicity and synergy effect of the food colloids, diarrhea resulting from ingestion of excess sugar alcohol (i.e. sugar alcohol intolerance) can be reduced, and the beneficial effects of safety and practicality of sugar alcohol in product applications can be improved. It is applied in the high-sugar products with a total content of sugar alcohol more than 30g. It can be used in products having requirements for sweetness and texture, especially in the foods of juices and cakes. Combination of food colloid system and sugar alcohol can, under the precondition of use of less food colloids, slow the advance time of sugar alcohol in the gastrointestinal tract, balance high osmosis of sugar alcohol, and relieve diarrhea resulting from high-content sugar alcohol, thus preventing and relieving the sugar alcohol intolerance resulting from the sweeteners with high sugar alcohol content.

### BRIEF DESCRIPTION OF THE DRAWINGS

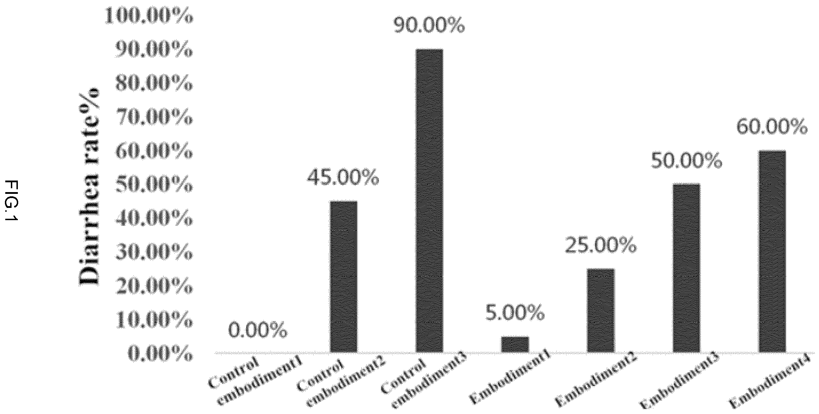

FIG. 1 is a statistics schematic diagram of a diarrhea rate of SD rats during verification tests performed by using the sweetener liquid prepared in the embodiments 1 to 4 and the control embodiments 1 to 3 of the present invention.

### DETAILED DESCRIPTION OF THE EMBODIMENTS

In order to make the technical problems to be solved, the technical solutions and the beneficial effects of the present invention clearer, the present invention will be further described in details in combination with the drawings and embodiments. It should be understood that the specific embodiments described herein are used only to interpret the present invention rather than limit the present invention.

In a preferred embodiment of a sweetener liquid for preventing and relieving intestinal sugar alcohol intolerance according to the present invention, the sweetener liquid per 100ml includes 0.01 to 0.04g of low-esterification pectin, 0.01g to 0.1g of κ-carrageenan, 0.01g to 0.03g of locust bean gum, 30g to 60g of xylitol, 5g to 15g of maltitol and 1g to 10g of sorbitol and remaining water; the low-esterification pectin is a pectin concentrate including, based on parts by weight, 15 parts of calcium citrate, 60 parts of low-molecular-weight pectin, 85 parts of ethylene glycol, 5 parts of carboxymethyl cellulose sodium and 30 parts of sodium citrate; the low-molecular-weight pectin includes a low-sugar fruit juice and a lemon juice; the sweetener liquid has a pH of 5-6.5 and a viscosity of 0.1 to 25mPa•S.

The present invention further provides a method for preparing the sweetener liquid for preventing and relieving intestinal sugar alcohol intolerance, including the following steps: dissolving low-esterification pectin, κ-carrageenan, locust bean gum, xylitol, maltitol, and sorbitol in water to obtain the sweetener liquid, wherein the low-esterification pectin is obtained in the following steps:
At step 1, a cleaned low-sugar fruit is placed into a closed dryer, carbon dioxide with a volume fraction of 75% is introduced into the dryer for treatment of 12h to 18h, beating is performed to obtain a pomelo fruit syrup, a lemon juice of pH1.5 to 2.0 is added into the obtained low-sugar fruit syrup, and continuous hydrolysis and extraction are performed for the fruit syrup for 65min to 80min under the temperature of 85°C to obtain a pectin extract for later use.
At step 2, an activated carbon of a particle size of 180 meshes and water are mixed at a weight ratio of 1:5 to obtain an activated carbon mixed solution, a nitric acid solution with a weight fraction of 80% is added into the activated carbon mixed solution, heating is performed to 100 to 110°C, cooking is performed for 3h to 3.5h,and then heating is stopped to allow natural cooling to 65°C, and stirring is stopped to allow continued cooling to room temperature to obtain an acid-cooked activated carbon solution for later use.
At step 3, a 160-mesh gauze is used to coarsely filter the pectin extract prepared in step 1, the obtained filtrate is placed into a high speed centrifuge for centrifugation at a rotation speed of 4500 to 5000r/min, a low-layer gel is collected and then the acid-cooked activated carbon solution prepared in step 2 is added into the low-layer gel and stirring is performed for decolorization of 35min to 60min with a decolorization temperature controlled to 45°C, so as to obtain a decolorized pectin filtrate.
At step 4, the above decolorized pectin filtrate is filtered by using diatomite and the filtrate is placed into a dialysis bag, and then placed in a pulsating pressure chamber filled up with de-ionized water for pulsating pressure treatment of 10h with a pulsation cycle of 200min under a treatment temperature of 4 °C so as to obtain a low-molecular-weight pectin.
At step 5, based on parts by weight, 60 parts of the above low-molecular-weight pectin, 15 parts of calcium citrate, 85 parts of ethylene glycol, 5 parts of carboxymethyl cellulose sodium, and 30 parts of sodium citrate are placed into a closed stirring kettle while stirring is performed at a rotation speed of 550 to 600r/min, and heating is performed to 55 to 65°C, and ammonia gas is introduced into the stirring kettle which is then placed into a vacuum evaporator with a vacuum degree of -0.1kPa for treatment to obtain a pectin concentrate, i.e. low-esterification pectin.

In step 1, the low-sugar fruit includes at least one of pomelo, cherry and guava.

The method of preparing a sweetener liquid for preventing and relieving intestinal sugar alcohol intolerance according to the present invention will be further described in combination with specific embodiments.

### Embodiment 1

In the first embodiment of the method of preparing a sweetener liquid for preventing and relieving intestinal sugar alcohol intolerance according to the present invention, the sweetener liquid per 100ml includes 0.02g of low-esterification pectin, 0.05g of κ-carrageenan, 0.2g of locust bean gum, 30g of xylitol, 10g of maltitol and 5g of sorbitol and a proper amount of water for supplementing to 100ml.

### Embodiment 2

In the second embodiment of the method of preparing a sweetener liquid for preventing and relieving intestinal sugar alcohol intolerance according to the present invention, the sweetener liquid per 100ml includes 0.02g of low-esterification pectin, 0.05g of κ-carrageenan, 0.2g of locust bean gum, 40g of xylitol, 10g of maltitol and 5g of sorbitol and a proper amount of water for supplementing to 100ml.

### Embodiment 3

In the third embodiment of the method of preparing a sweetener liquid for preventing and relieving intestinal sugar alcohol intolerance according to the present invention, the sweetener liquid per 100ml includes 0.02g of low-esterification pectin, 0.05g of κ-carrageenan, 0.2g of locust bean gum, 50g of xylitol, 10g of maltitol and 5g of sorbitol and a proper amount of water for supplementing to 100ml.

### Embodiment 4

In the fourth embodiment of the method of preparing a sweetener liquid for preventing and relieving intestinal sugar alcohol intolerance according to the present invention, the sweetener liquid per 100ml includes 0.02g of low-esterification pectin, 0.05g of κ-carrageenan, 0.2g of locust bean gum, 60g of xylitol, 10g of maltitol and 5g of sorbitol and a proper amount of water for supplementing to 100ml.

### Control embodiment 1

In the control embodiment, the prepared sweetener liquid per 100ml includes 0.02g of low-esterification pectin, 0.05g of κ-carrageenan, 0.2g of locust bean gum, and a proper amount of water for supplementing to 100ml, and does not include xylitol, maltitol and sorbitol.

### Control embodiment 2

In the control embodiment, the prepared sweetener liquid per 100ml includes 30g of xylitol, 10g of maltitol and 5g of sorbitol, and a proper amount of water for supplementing to 100ml, and does not include low-esterification pectin, κ-carrageenan and locust bean gum.

### Control embodiment 3

In the control embodiment, the prepared sweetener liquid per 100ml includes 60g of xylitol, 10g of maltitol and 5g of sorbitol, and a proper amount of water for supplementing to 100ml, and does not include low-esterification pectin, κ-carrageenan and locust bean gum. The xylitol content is higher than in the second control embodiment.

The components of embodiments 1 to 4 and control embodiments 1 to 3 are summarized into Table 1.

**Table 1 Components of embodiments 1 to 4 and control embodiments 1 to 3**

| Components | Embo dimen t 1 | Embo dimen t2 | Embo dimen t3 | Embo dimen t4 | Contr ol embo dimen t 1 | Contr ol embo dimen t2 | Contr ol embo dimen t3 |
|---|---|---|---|---|---|---|---|
| | Conte nt % | Conte nt % | Conte nt % | Conte nt % | Conte nt % | Conte nt % | Conte nt % |
| Low-esterificati on pectin | 0.02 | 0.02 | 0.02 | 0.02 | 0.02 | / | / |
| κ-carrageenan | 0.05 | 0.05 | 0.05 | 0.05 | 0.05 | / | / |
| Locust bean gum | 0.2 | 0.2 | 0.2 | 0.2 | 0.2 | / | / |
| Xylitol | 30 | 40 | 50 | 60 | / | 30 | 60 |
| Maltitol | 10 | 10 | 10 | 10 | / | 10 | 10 |
| Sorbitol | 5 | 5 | 5 | 5 | / | 5 | 5 |
| De-ionized water | Remai ning | Remai ning | Remai ning | Remai ning | Remai ning | Remai ning | Remai ning |

The sweetener liquids of embodiments 1 to 4 and control embodiments 1 to 3 are verified for their effects in the following control tests.

The verification test method includes the following steps:
1) SD male rats above the age of 6-8 weeks are adaptively fed for one week, and then uniformly divided into 7 groups with each group including 10 rats based on body weight, totaling 70 rats.
2) At 9:00am of each day, 7 groups of rats are gavaged respectively based on a conversion formula for body surface areas of human and rat and then freely fed with water and foods.
3) After corresponding doses of reagent are gavaged based on body weight, diarrheas of each group of rats are observed and recorded twice within 4 to 8 hours after gavage, for example, gavage is performed at 9:00am, and two observations are performed at 13:30pm and 16:30pm. Whether diarrhea occurs is determined by observing the anuses or bottom base of the rats, or tail pull for promoting excretion, and the diarrhea probability of each group of rats is calculated to obtain the test results shown in Table 2 and the test comparison diagram shown in FIG. 1.

**Table 2 Results of verification tests (statistics of the diarrhea rate of each group of SD rats)**

| | Embo dimen t 1 | Embo dimen t2 | Embo dimen t3 | Embo dimen t 4 | Contr ol embo dimen t 1 | Contr ol embo dimen t2 | Contr ol embo dimen t3 |
|---|---|---|---|---|---|---|---|
| Diarrhea rate of SD rats (%) | 5 | 25 | 50 | 60 | 0 | 45 | 90 |

As can be known from Table 2 and FIG. 1, the sweetener liquid prepared in the control embodiment 1 will not cause diarrhea to the rats; in the embodiments 1 to 4, along with the use amount of xylitol gradually increasing from 30g to 60g, the diarrhea rate of the corresponding SD rats increases. In a case of a same sugar alcohol compounding amount, for example, in the embodiment 1 and the control embodiment1, and the embodiment 4 and the control embodiment 3, a given amount of a mixture of low-esterification pectin, κ-carrageenan and locust bean gum is added to the sweetener liquid, and hence, the diarrhea rate of the rats is reduced accordingly from 45% to 5% and 90% to 60%. It is shown that the sweetener liquid in combination with the composition of food colloid system and sugar alcohol mixed at a ratio can slow the advance time of sugar alcohol in the gastrointestinal tract, or balance high osmosis of sugar alcohol so as to relieve diarrhea resulting from high-content sugar alcohol, thus greatly increasing the tolerance of the rats to the mixtures with high sugar alcohol content, and improving the safety and practicality of the sugar alcohol sweeteners in product applications.

### Embodiment 5

In the fifth embodiment of the method of preparing a sweetener liquid for preventing and relieving intestinal sugar alcohol intolerance according to the present invention, the sweetener liquid per 100ml includes 0.01g of low-esterification pectin, 0.01g of κ-carrageenan, 0.01g of locust bean gum, 60g of xylitol, 5g of maltitol and 1g of sorbitol and a proper amount of water for supplementing to 100ml.

### Embodiment 6

In the sixth embodiment of the method of preparing a sweetener liquid for preventing and relieving intestinal sugar alcohol intolerance according to the present invention, the sweetener liquid per 100ml includes 0.04g of low-esterification pectin, 0.1g of κ-carrageenan, 0.3g of locust bean gum, 40g of xylitol, 15g of maltitol and 10g of sorbitol and a proper amount of water for supplementing to 100ml.

The present invention further provides an application of a sweetener liquid prepared by using the above method of preparing a sweetener liquid for preventing and relieving intestinal sugar alcohol intolerance according to the present invention, including application of the sweetener liquid in beverage or porridge foods or fruit jam foods.

The above descriptions are made only to the preferred embodiments of the present invention and shall not be intended to limit the present invention. Any changes, equivalent substitutions and improvements within the spirit and principle of the present invention shall all fall within the scope of protection of the present invention.

## Claims

1. A sweetener liquid for preventing and relieving intestinal sugar alcohol intolerance, wherein the sweetener liquid per 100ml comprises 0.01 to 0.04g of low-esterification pectin, 0.01g to 0.1g of κ-carrageenan, 0.01g to 0.3g of locust bean gum, 30g to 60g of xylitol, 5g to 15g of maltitol and 1g to 10g of sorbitol and remaining water; the low-esterification pectin is a pectin concentrate comprising, based on parts by weight, 15 parts of calcium citrate, 60 parts of low-molecular-weight pectin, 85 parts of ethylene glycol, 5 parts of carboxymethyl cellulose sodium and 30 parts of sodium citrate; the low-molecular-weight pectin comprises a low-sugar fruit juice and a lemon juice; the sweetener liquid has a pH of 5-6.5 and a viscosity of 0.1 to 25mPa·S.

2. A method of preparing the sweetener liquid for preventing and relieving intestinal sugar alcohol intolerance according to claim 1, comprising the following steps: dissolving low-esterification pectin, κ-carrageenan, locust bean gum, xylitol, maltitol, and sorbitol in water to obtain the sweetener liquid, wherein the low-esterification pectin is obtained in the following steps:
at step 1, placing a cleaned low-sugar fruit into a closed dryer, introducing carbon dioxide with a volume fraction of 75% into the dryer for treatment of 12h to 18h, performing beating to obtain a pomelo fruit syrup, adding a lemon juice of pH1.5 to 2.0 into the obtained low-sugar fruit syrup, and performing continuous hydrolysis and extraction for the fruit syrup for 65min to 80min under the temperature of 85°C to obtain a pectin extract for later use;
at step 2, mixing an activated carbon of a particle size of 180 meshes and water at a weight ratio of 1:5 to obtain an activated carbon mixed solution, adding a nitric acid solution with a weight fraction of 80% into the activated carbon mixed solution, heating to 100 to 110°C, cooking for 3h to 3.5h,and then stopping heating to allow natural cooling to 65°C, and stop stirring to allow continued cooling to room temperature to obtain an acid-cooked activated carbon solution for later use;
at step 3, using a 160-mesh gauze to coarsely filter the pectin extract prepared in step 1, placing the obtained filtrate into a high speed centrifuge for centrifugation at a rotation speed of 4500 to 5000r/min, collecting a low-layer gel and then adding the acid-cooked activated carbon solution prepared in step 2 into the low-layer gel and stirring for decolorization of 35min to 60min with a decolorization temperature controlled to 45°C, so as to obtain a decolorized pectin filtrate;
at step 4, filtering the above decolorized pectin filtrate by using diatomite and placing the filtrate into a dialysis bag, and then placing the dialysis bag in a pulsating pressure chamber filled up with de-ionized water for pulsating pressure treatment of 10h with a pulsation cycle of 200min under a treatment temperature of 4°C so as to obtain a low-molecular-weight pectin.
at step 5, based on parts by weight, placing 60 parts of the above low-molecular-weight pectin, 15 parts of calcium citrate, 85 parts of ethylene glycol, 5 parts of carboxymethyl cellulose sodium, and 30 parts of sodium citrate into a closed stirring kettle, stirring at a rotation speed of 550 to 600r/min, heating to 55 to 65°C, introducing ammonia gas into the stirring kettle and then placing into a vacuum evaporator with a vacuum degree of -0.1kPa for treatment to obtain a pectin concentrate, i.e. low-esterification pectin.

3. The method of claim 2, wherein at step 1, the low-sugar fruit comprises at least one of pomelo, cherry and guava.

4. The method of claim 2, wherein the sweetener liquid per 100ml comprises 0.02g of low-esterification pectin, 0.05g of κ-carrageenan, 0.2g of locust bean gum, 30g of xylitol, 10g of maltitol and 5g of sorbitol and a proper amount of water for supplementing to 100ml.

5. The method of claim 2, wherein the sweetener liquid per 100ml comprises 0.02g of low-esterification pectin, 0.05g of κ-carrageenan, 0.2g of locust bean gum, 40g of xylitol, 10g of maltitol and 5g of sorbitol and a proper amount of water for supplementing to 100ml.

6. The method of claim 2, wherein the sweetener liquid per 100ml comprises 0.02g of low-esterification pectin, 0.05g of κ-carrageenan, 0.2g of locust bean gum, 50g of xylitol, 10g of maltitol and 5g of sorbitol and a proper amount of water for supplementing to 100ml.

7. The method of claim 2, wherein the sweetener liquid per 100ml comprises 0.02g of low-esterification pectin, 0.05g of κ-carrageenan, 0.2g of locust bean gum, 60g of xylitol, 10g of maltitol and 5g of sorbitol and a proper amount of water for supplementing to 100ml.

8. The method of claim 2, wherein the sweetener liquid per 100ml comprises 0.01g of low-esterification pectin, 0.01g of κ-carrageenan, 0.01g of locust bean gum, 60g of xylitol, 5g of maltitol and 1g of sorbitol and a proper amount of water for supplementing to 100ml.

9. The method of claim 2, wherein the sweetener liquid per 100ml comprises 0.04g of low-esterification pectin, 0.1g of κ-carrageenan, 0.3g of locust bean gum, 40g of xylitol, 15g of maltitol and 10g of sorbitol and a proper amount of water for supplementing to 100ml.

10. An application of the sweetener liquid prepared using the method for preparing the sweetener liquid for preventing and relieving intestinal sugar alcohol intolerance according to any one of claims 2 to 9, comprising application of the sweetener liquid in foods.
